# EUROPEAN PATENT APPLICATION

(11) **EP 4 804 419 A1**
(43) Date of publication of application: **09.09.2026**
(21) Application number: 25162383.1
(22) Date of filing: 07.03.2025
(51) Int. Cl.: H04B 7/024, H04B 7/06

(54) **ISAC INTERFERENCE CANCELLATION FOR SENSING SIGNAL VIA DRONES FOR EXTENDED SENSING RANGE**

(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

There is provided a method of reducing interference in an Integrated Sensing and Communication, ISAC, system. The method comprises exchanging location information between a base station (100) and a drone (150) and preparing a beam of a sensing signal (120) taking into account the location of the drone (150). Information about the sensing signal (120) is then shared with the drone (150). Whilst the base station (100) transmits the sensing signal (120) and a communication signal (110), the drone (150) transmits an interference cancellation signal (130), derived from the information about the sensing signal (120) received from the base station (100), so as to suppress interference of the communication signal (110) by the sensing signal (120).

## Description

### Field of the invention

The present invention relates to incorporating sensing technology with telecommunications network infrastructure. Integrated Sensing and Communications ("ISAC") involves transmitting a sensing signal and a communication signal from a base station of a Radio Access Network (RAN base station).

### Background section

There are many types of telecommunications systems, but this invention is in particular directed towards mobile telecommunications systems, such as wireless cellular networks. Such wireless cellular networks usually comprise terrestrial base stations (sometimes called macro nodes or just base stations) which are located throughout a geographical region and communicate with each other to form a cellular network that allows communication to and between user equipment, such as smart phones, tablets, laptops or the like. These terrestrial base stations are typically high-powered base stations at fixed locations.

Recent developments in radio communications have tried to integrate sensing functionality within the mobile communications systems. Known as *"Integrated Sensing and Communications",* or ISAC, radar tracking technologies are incorporated into the base stations of radio access network (RAN) base stations. Currently, this is one of the main ideas being proposed for baseline 6G base stations. However, there are already proposals from multiple companies to support sensing in 5G base stations. ISAC technology simultaneously serve traditional wireless communication services and act as sensor nodes (e.g., by providing sensing functionality similar to radar) to provide environmental sensing functionality, such as intruder detection, drone monitoring, meteorological prediction, and the like.

The new ISAC technology brings several key technical advantages to a communications network. ISAC enables spectrum sharing between communication and sensing, reducing the need for separate resources. It helps RAN systems detect objects, track movements, and enhance network optimization. ISAC is also a key component of future 6G networks, supporting applications like autonomous driving, smart cities, and industrial automation. It can even improve beamforming accuracy and enables precise localization of users and devices requiring the communication signal.

However, whilst leveraging this new capability, it must be assured that adding sensing capabilities to telecommunications base stations will not adversely affect the existing communication network. At the same time, an efficient utilization of the available spectrum is needed in order to avoid wasting limited frequency resources and energy in employing ISAC in the communication network.

One way to enable sensing capabilities whilst providing communication services is to send the sensing signals in beams (precode sensing signals) and the communication signals in beams. The same radio resources (frequency and time) can be used between both features when the beams are not overlapped. Otherwise, different radio resources can be used (different time slot or frequency). By following the precoding/beams approach for sensing and communication signals, the available spectrum may be used efficiently.

However, in certain scenarios, such as political gatherings, cultural events such as music festivals, or sporting events, ISAC base stations may need to extend their normal sensing range to enhance situational awareness and monitoring. However, this expanded sensing coverage can introduce interference with communication signals, particularly in densely populated areas or environments with complex wireless conditions.

Since ISAC base stations are deployed in diverse settings, the impact of interference can vary significantly depending on urban, rural, or indoor environments. In particular, when the sensing range is extended so as to exceed the expected operational limits, unintended interference may arise affecting the reliability of communication services, for example due to non-linear effects. This extended range could be an increase in the distance from the base station that the sensing can be effective or could relate to some other parameter that has surpassed normal working values.

Therefore, effective interference mitigation strategies are essential to ensure that sensing functions do not degrade communication performance, especially in scenarios where both services must operate seamlessly within the same frequency spectrum. Therefore, it would be desirable to suppress interference caused by the sensing signal to communication signals when using ISAC, especially if the sensing parameters have to exceed the usual operational limits.

### Summary of the invention

The present invention has been formulated to provide a computer-implemented method that allows the deployment of one or more UAVs to provide interference cancellation so as to improve access to a telecommunications network within an ISAC system, particularly when it is extending its sensing capabilities beyond normal usage.

According to an aspect of the present invention, there is provided a method of reducing interference in an Integrated Sensing and Communication, ISAC, system. The method comprises: exchanging location information between a RAN base station and a drone; preparing, by the RAN base station, a beam of a sensing signal taking into account the location of the drone; sharing information about the sensing signal with the drone; transmitting, by the RAN base station, the sensing signal and a communication signal; and transmitting, by the drone, an interference cancellation signal derived from the information about the sensing signal received from the RAN base station so as to suppress interference with the communication signal.

This method has particular advantages when the sensing signal has been extended, either in distance, power, bandwidth, or other parameter, beyond its normal working parameters such that the usual interference mitigation techniques no longer function correctly. Instead, a drone delivered interference cancellation signal is used to reduce or cancel any interference with the communication signal due to the sensing signal.

Optionally, the method further comprises exchanging antenna orientation information between the RAN base station and the drone and wherein the interference cancellation signal is also based on the antenna orientation information. With the further information of the orientation antenna of the base station, the interference cancellation signal can be better tailored to the sensing signal. This might be particularly advantageous when the signals are directed in certain directions.

Optionally, the interference cancellation signal is directed towards a target suppression area. This allows the interference cancellation signal to be directed to an area where it is needed most, for example a crowded area at special event.

Optionally, the RAN base station and drone use directional beamforming to control where the sensing signal is enhanced or suppressed.

Optionally, the method further comprises null-steering beamforming at the drone creates spatial nulls in the target suppression area, reducing sensing signal power.

Optionally, the method further comprises dynamically adjusting the phase and amplitude of the interference cancellation signal to cancel out inference in the target suppression area.

Optionally, the drone transmits as the interference cancellation signal a phase-inverted version of the sensing signal to the suppression area.

Optionally, the cancellation signal interferes destructively with the sensing signal, reducing interference in the target suppression area.

Optionally, the interference cancellation signal is prepared using Interference Alignment, IA, with precoding.

Optionally, the interference cancellation signal is prepared using frequency domain interference suppression via nulling.

Optionally, the interference cancellation signal is prepared using deep learning-based predictive interference mitigation.

Optionally, the communication signal is extended using a first drone and a second drone transits the interference cancellation signal, wherein the second drone takes into consideration the position of the first drone when transmitting the interference cancellation signal.

Optionally, the interference cancellation signal is transmitted by more than one drone.

According to another aspect of the invention, there is provided a drone configured to perform the above-described methods.

According to another aspect of the invention, there is provided a base station configured to perform the above-described methods.

According to another aspect of the invention, there is provided a computer program configured to cause the processor to perform the above-described methods.

### Brief description of the drawings

Embodiments of the invention will now be described, by way of example only, and with reference to the accompanying drawings of which:
Figure 1 shows a schematic of a mobile network according to the prior art;
Figure 2 shows a schematic diagram using a sensing signal to track different types of vehicles in the area of the base station;
Figure 3 shows a schematic diagram of an ISAC base station according to an embodiment of the present invention that uses a communication signal to communicate with user equipment and a sensing signal to track various vehicles;
Figure 4 shows a schematical diagram of an ISAC base station according to an embodiment of the present invention whose functionality has been extended due to the occurrence of a special event. However, interference between the sensing and communication signals can occur;
Figure 5 shows a schematical diagram of an ISAC base station according to an embodiment of the present invention in which a drone is used to direct an interference cancellation signal towards target suppression area;
Figure 6 shows a flowchart of the essential features of the invention;
Figure 7 shows a schematic diagram of a drone configured to provide an interference cancellation signal; and
Figure 8 shows a schematical diagram of an ISAC base station according to an embodiment of the present invention in which the communication signal is boosted by a first drone and a second drone used to direct an interference cancellation signal towards target suppression area.

### Detailed description of the embodiments

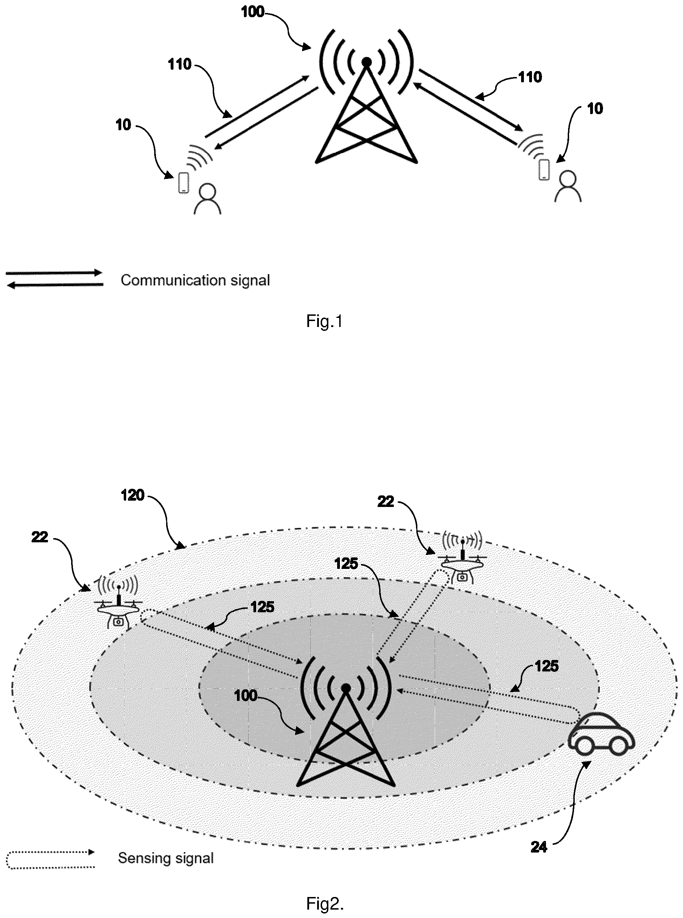

Figure 1 shows an example of a telecommunications network comprising a terrestrial base station 100 of a wireless cellular network and two users accessing the network using their own personal network devices 10 (or "user equipment"). The user equipment 10 could be smart phones, tablets, laptops or the like. The base station 100 and user equipment 10 communicate to each other using two-way communication signals 110. In this manner, the base station 100 is able to know the direction of the incoming signals 110 from a particular user equipment 10 and direct the return communication signal 110 to the same direction. This can help to avoid interference between communication signals 110 from user equipment 10 orientated at different directions.

Figure 2 shows a same base station 100 that is being used for sensing. The base station 100 emits a sensing signal 120 to see if there are any reflected sensing signals 125 from objects in the range of the sensing signal 120. The emitted sensing signal 120 is depicted as a set of concentric lightly shaded ovals centred on the base station 100, although it should be understood that other shapes of the signal could be transmitted, particularly if the sensing is directed towards a specific area/direction.

In figure 2 there are two air-based vehicles 22, such as drones or other aircraft, and one land-based vehicle 24, such as a car, van, bus or the like. Each of these vehicles cause a reflection of the sensing signal 120 to be received at the base station. The reflected sensing signals 125 that have been reflected by the air-based vehicles 22 or ground-based vehicles 24 are depicted as reflected dotted arrows. By determining the time and direction of the received signal, the base station 100 can determine distance and direction of these objects using radar techniques. The sensing is not limited to vehicles, and the sensing can be used to detect buildings, meteorological events, or any other object that would reflect the transmitted sensing signal 120 detectable at the base station 100.

However, since the location of the objects being tracked is presumably not known, or at least not known accurately, the direction of the transmitted sensing signal 120 cannot be directed to a specific direction, like the communication signal 110 can. In figure 2, the transmitted sensing signal 120 is depicted as omnidirectional, in order to track an object coming from any direction.

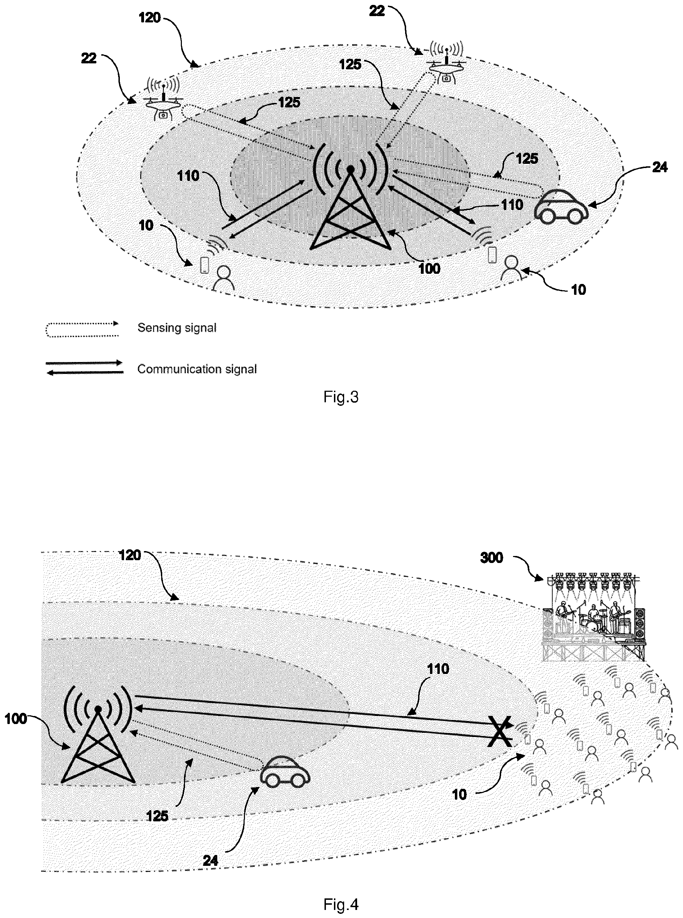

Figure 3 shows an ISAC base station 100 that is transmitting and receiving both communication signals 110 for two-way communication with user equipment 10 and a sensing signal 120 for tracking objects such as air-based vehicles 22 and land-based vehicles. As can be seen, the user equipment 10 will likely be in the field of the transmitted sensing signal 120, and so would likely be able to receive the sensing signal 120 as well as the communication signal 110 from the base station 100. Therefore, there is a danger that the sensing signal 120 will interfere with the communication signal 110, reducing the quality of the connection of the user equipment 10 with the telecommunications network. That is, since ISAC systems share resources between communication and sensing functionalities, interference management is crucial.

Accordingly, techniques must be employed to avoid the sensing signal 120 causing deterioration of the two-way communication 110 between the user equipment 10 and the base station 100. These techniques could be in the form of waveform design, such as using waveforms that are orthogonal in time, frequency, or code domain to reduce mutual interference, or using hybrid waveforms that serve both communication and sensing without causing interference. Alternatively, separate time slots could be allocated for sensing and communication to prevent simultaneous interference, or different frequency bands could be used for sensing and communication. These are just examples, and other techniques could be used.

However, there may be times when the usual extent of the sensing functionality might need to be extended beyond its usual capacity. For example, during special events such as political gatherings, cultural events such as music festivals, or sporting events, ISAC base stations 100 may need to extend their sensing range to enhance situational awareness and monitoring. This range may be, for example, an increase of the distance that objects can be tracked, for example by increasing power or changing frequency range of the sensing signal 120, or increasing or changing the timeslots required for the sensing signal 120.

In figure 4 there is depicted schematically a special event 300 in the distant vicinity of the base station 100. In this case, the special event 300 is depicted as a music festival, but this may be any event requiring extra sensing capabilities.

In this case, the sensing capabilities of the base station 100 will be stretched beyond its normal operating parameters, and the usual interference mitigation techniques might not function ideally. For example, the higher powers of the sensing beam could lead to non-linear effects that could cause interference with the communications signal. This problem could be exasperated by the fact that such special events 300 could also lead to more than the usual number of users connecting their user equipment 10 to the telecommunications network, requiring more bandwidth for the communication signal.

As shown in figure 4, the sensing signal 120 is extended to ensure that it covers the special event 300. This ensures that it can track objects, such as land-based vehicles 24, or aerial vehicles (not shown in figure 4). However, at the special event 300 there are multiples user equipment 10 that may be trying to access the network. However, interference of the communications signal 110 with the extended sensing signal 120 may reduce or prevent connectivity with the telecommunications network (indicated with an X in figure 4).

An aim of the present invention is to reduce or cancel the interference of a communication signal 110 of an ISAC base station 100 caused by its own sensing signal 120.

According to embodiments of the present invention, an interference cancellation signal 130 is directed to an area in which any interference is desired to be reduced or cancelled. The interference cancellation signal 130 is transmitted by an unmanned aerial vehicle 150 (UAVs), also known as uncrewed aerial vehicles, and often referred to as simply *"drones".* The term UAV and drone may be used interchangeably in this document.

Drones are inherently flexible. They can be repositioned as needed, providing targeted coverage and support network traffic in affected areas. The deployment of drones enhances the resilience of the telecommunications network, as they offer rapid deployment capabilities if required.

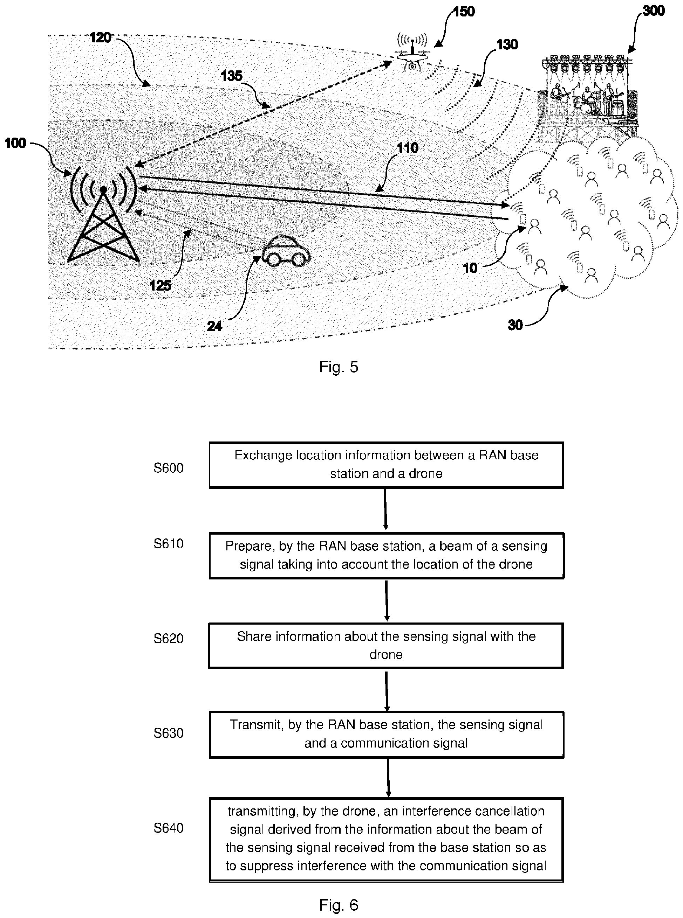

Figure 5 depicts the same scenario as figure 4, but now a target suppression area 30 is depicted around the user equipment 10 in the vicinity of the special event 300. This target suppression area 30 is an area in which it is desired that any interference between the sensing signal 120 and the communication signals 110 of the base station 100 are reduced or preferably cancelled.

In order to reduce or cancel any interference between the sensing signal 120 and the communication signals 110 in the target suppression area 30, a drone 150 is dispatched to a nearby aerial position.

Figure 6 highlights the essential steps S600 to S640 of the present invention.

According to the present invention, in step S600, the base station 100 and the drone 150 exchange location information via an information link 135, which is a two-way communication link between the drone 150 and the base station 100. This location information allows the drone 150 and base station 100 to account for each other's relative positions.

In step S610, the base station 100 then prepares a beam of the sensing signal 120, taking into account the location of the drone 150. It may preferably to also take into account the antenna orientation of the base station 100.

In step S620, the base station 100 then shares information about the sensing signal 120 with the drone 150 via the information link 135. Optionally, information may also be shared regarding the orientation of the antennae of the base station 100.

In step S630, the base station 100 then transmits the sensing signal 120 and a communication signal 110. The communication signal allowing communication with user equipment 10 and the sensing signal 120 allowing tracking of objects 22, 24.

In step S640, the drone 150 transmits an interference cancellation signal 130 derived from the information about the sensing signal 120 received from the base station 100 so as to suppress interference with the communication signal 110. This interference cancellation signal 130 is generated as discussed below so that the sensing signal 120 causes minimal interference with the communication signal 110.

The interference cancellation signal 130 may be directed towards a specific area, such as the suppression target area 30 of the special event 300, so that user equipment 10 at the special event 300 are still able to access the telecommunications network without undue interference with the sensing signal 120. In the figures, the interference cancellation signal 130 is depicted as a set of concentric arcs expanding from the drone 150 towards the target suppression area 30. However, it should be understood that this is merely a convenient depiction of the signal, which may be of different shapes and direction.

There is now discussed several non-limiting examples of techniques to generate the interference cancellation signal 130.

The invention could use beamforming-based interference suppression. For example, the ISAC base station 100 and the drone 150 could use directional beamforming to control where the sensing signal 120 is enhanced or suppressed. Further, the null-steering beamforming could be used at the drone 150 to create spatial nulls in the target suppression area 30, reducing the power of the sensing signal 120. Still further, the phase and amplitude of the transmitted signal could be dynamically adjusted to cancel out inference locally.

Alternatively, active interference cancellation using adaptive filtering could be adopted. For example, the drone 150 could transmit a phase-inverted version of the ISAC sensing signal 120 in towards the target suppression area 30 so that the interference cancellation signal 130 interferes destructively with the original sensing signal 120, reducing its impact in the target suppression area 30. Other techniques that could be used include interference Alignment (IA) with precoding, frequency domain interference suppression via nulling and deep learning-based predictive interference mitigation.

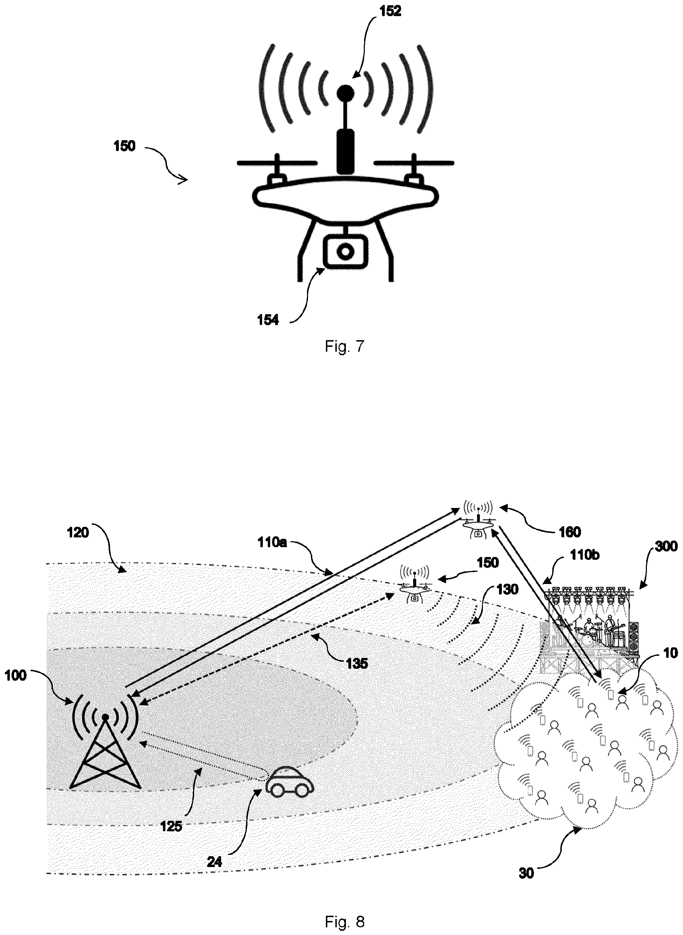

Figures 7 shows a schematic representation of a drone 150 configured to provide the interference cancellation signal 130. In figure 7, the drone 150 is a rotary wing UAV which has the advantage of being very manoeuvrable and being able to hover in a mostly stationary position. However, the invention is not limited to rotary wing drones 150, and it should be understood that any other type of unmanned aerial vehicle is envisaged. For example, the drone 150 could be a fixed-wing type drone. These drones have the advantage of typically being able to carry higher payloads and sustain longer flight durations than rotary wing drones. However, a fixed wing drone needs to keep moving, and so cannot hover in the same place in the same way as a rotary wing drone. Nevertheless, a fixed wing drone could be held in a quasi-stationary position by flying in a small radius circle. The drone 150 could even be a remotely controllable dirigible.

The drone 150 could be powered by electricity. For example, it could be fitted with a rechargeable battery that could be kept charged when not in use. Alternatively, it may be powered by fuels such as petrol, kerosene, methanol, ethanol, and propane, in which case they would need refuelling. An alternative to combustible fuel could be hydrogen fuel cells. An interesting alternative could be the use of solar cells, to provide longer intervals before recharging.

The drone 150 has a network device 152 mounted on its upper side. The network device 152 could of course be mounted anywhere on the drone 150, either externally or internally. The network device 152 could be a transceiver capable of receiving communication from the base station 100 and transmitting the interference cancellation signal 130. Indeed, a single drone 150 could be fitted with more than one type of network device 152 for increased flexibility, or the receiving and transmitting of the signals could be carried out by separate network devices 152.

The drone 150 could further have a processor configured to compute the interference cancellation signal 130. Alternatively, the interference cancellation signal 130 could be computed at the base station 100, or processor coupled to the base station 100, and the form of the interference cancellation signal 130 transmitted to the drone 150 via the information link 135. The drone then being configured to transmit the interference cancellation signal 130. The base station 100 may even generate the interference cancellation signal 130 itself and transmit it to the drone 130, so that the drone 130 can simply retransmit the interference cancellation signal 130 in the required direction.

The drone 150 may have one or more other devices in order to operate effectively. The drone 150 could advantageously be fitted with devices (not shown) capable of providing accurate location data, such as by GPS or similar positioning methods. The drone 150 may also be fitted with a camera 154 in order to provide visual data. This visual data can be used by the drone as part of locating the position of the drone 150 and also as part of crash-avoidance methods. The camera 154 can also provide visual confirmation that it is located in the correct position.

In some embodiments, the drone 150 could be stationed at a UAV depot waiting for deployment. The UAV depot is a base where the drone 150 is stored to keep it secure and also where it can be fully charged. Whilst at the UAV depot, the drone 150 could be kept on continual charge at a charging station to ensure that they are ready for deployment when required.

The UAV depot is preferably located on land owned by the service provider operating the telecommunications network. For example, the UAV depot could be located on the same premises as the base stations 100 associated with the telecommunications network. In this way, security of the UAV depot and maintenance of the drone 150 could be assured by the service provider operating the telecommunications network.

Alternatively, the UAV depot could be located, independently of any of the telecommunications network infrastructure, in a dedicated space for the storage and charging of the drone 150.

It is even possible to have a temporary UAV depot, for example located on the back of a vehicle such as a lorry. In this case, the vehicle may be driven close to an area that the drone 150 is scheduled to be deployed, so that it is ready for when the drone 150 is required. An example might be for a scheduled special event 300 such as a music festival, where it is expected that there could be connection issues due to interference with an extended sensing signal 120.

It may be that no single drone 150 could meet all of the requirements requested by the end user. In which case, it may be necessary to select more than one drone 150 to meet the interference cancellation requirements. For example, if the target suppression area 30 is too large for a single drone 150, then more than one drone 150 may be deployed to ensure the desired area is covered. Alternatively, there may be more than one target suppression area 30, each requiring its own drone.

One downside of drones is that they have limited power, and therefore limited time of flight (or range). Different types of drones have different maximum flight times, and these are improving all of the time. However, all drones will have to be recharged (or refuelled) at some point.

If the required duration of the interference cancellation exceeds that of one drone 150, then one option is to tag-team more than one drone 150. That is, a second drone 150 could be scheduled to take over from a first drone 150 when the first drone 150 needs to return to the UAV depot in order to recharge or refuel. The connection to the telecommunications system being handed over from one drone 150 to the other drone 150 before the first drone 150 returns to the UAV depot 110. Indeed, multiple drones 150 could be strung together to ensure a continuous connection that could be maintained for any required length of time.

Alternatively, it may be possible to recharge or refuel the drone 150 whilst it remains in position providing access to the network. Techniques for mid-air charging are in their infancy but may allow for longer or even indefinite flight times for the drones 150. Options for recharging include mid-air charging of the drone 150 by a charging-drone. This might be via a wired connection or by wireless charging. Alternatively, there could be a mid-air battery swap. This might require the drone 150 having more than one battery, such that it remains powered by a second battery, as its first battery is swapped out for a fully charged battery. In these cases, a further charger drone or battery swapping drone would be required. These could be instructed by the network orchestrator 30 to connect with the deployed drone 150 to provide recharging or battery swapping at a suitable time.

During a special event 300, not only might the sensing signal 120 need to be extended, but so too might the communications signal 110. Another developing technology for providing improved access to a telecommunications network also makes use of drones.

In figure 8, a telecommunication drone 160 can be equipped with network devices that allow the connection of user equipment 10 with the telecommunications system. For example, the network device could be an aerial micro node, being a radio access node mounted to the telecommunication drone 160. The telecommunication drone 160 could then be positioned near to an area that requires extra bandwidth and could connect directly with the base station 100 in order to provide access to the network, and so forming an *"aerial base station"* (ABS) to which user devices 10 can connect. Essentially, the telecommunication drone 160 can extend or supplement the communication signal 110 from the base station 100 to the user equipment 10. For example, a backhaul communication connection 110a can connect the network device of the telecommunication drone 160 and the telecommunication drone 160 can then connect to the user equipment 10 via a telecommunication link 110b. Essentially, the communication signal 110 can be routed through the telecommunication drone 160 via the backhaul communication connection 110a and the telecommunication link 110b.

In this case, the communication signal that might interfere with the sensing signal 120 would be the telecommunications link 110b, which is coming from a different location and direction than the communication signal 110. Therefore, the generation of the interference cancellation signal 130 would need to take into consideration the location of the telecommunication drone 160. This information being provided by the base station 100 in the information link 135. In one embodiment, the user equipment 10 may be connected to the communication network both directly, from the base station 100 via the communication signal 110, and indirectly, from the telecommunication drone 160 via the telecommunication link 110b. In this manner it would be necessary for the generation of the interference cancellation signal 130 to take into consideration both the position of the communication drone 160 and drone 150 transmitting the interference cancellation signal 130. This might require more than one interference cancellation signal 130.

Although particular embodiments have been described as examples to illustrate the invention, a number of alternatives and variations would be apparent to the skilled person without departing from the invention as set out in the claims. It should be clear that the various described embodiments may be combined, even when not explicitly recited in combination.

## Claims

1. A method of reducing interference in an Integrated Sensing and Communication, ISAC, system, comprising:
exchanging location information between a RAN base station and a drone;
preparing, by the RAN base station, a beam of a sensing signal taking into account the location of the drone;
sharing information about the sensing signal with the drone;
transmitting, by the RAN base station, the sensing signal and a communication signal; and
transmitting, by the drone, an interference cancellation signal derived from the information about the sensing signal received from the RAN base station so as to suppress interference with the communication signal.

2. The method of claim 1, further comprising exchanging antenna orientation information between the RAN base station and the drone and wherein the interference cancellation signal is also based on the antenna orientation information.

3. The method of claim 1 or 2, wherein the interference cancellation signal is directed towards a target suppression area.

4. The method of claim 3, wherein the RAN base station and drone use directional beamforming to control where the sensing signal is enhanced or suppressed

5. The method of claim 4, wherein the method further comprises null-steering beamforming at the drone creates spatial nulls in the target suppression area, reducing sensing signal power.

6. The method of claim 4, wherein the method further comprises dynamically adjusting the phase and amplitude of the interference cancellation signal to cancel out inference in the target suppression area.

7. The method of claim 3, wherein the drone transmits as the interference cancellation signal a phase-inverted version of the sensing signal to the target suppression area.

8. The method of claim 7, wherein the cancellation signal interferes destructively with the sensing signal, reducing interference in the target suppression area.

9. The method of any preceding claim, wherein the interference cancellation signal is prepared using Interference Alignment, IA, with precoding.

10. The method of any preceding claim, wherein the interference cancellation signal is prepared using frequency domain interference suppression via nulling and/or wherein the interference cancellation signal is prepared using deep learning-based predictive interference mitigation.

11. The method of any preceding claim, wherein the communication signal is extended using a first drone and a second drone transits the interference cancellation signal, wherein the second drone takes into consideration the position of the first drone when transmitting the interference cancellation signal.

12. The method of any preceding claim, wherein the interference cancellation signal is transmitted by more than one drone.

13. A drone configured to perform the method of any of claims 1 to 12.

14. A base station configured to perform the method of any of claims 1 to 12.

15. A computer program comprising instructions that, when executed by a processor, cause the processor to perform the method of any of claims 1 to 12.
